# EUROPÄISCHE PATENTSCHRIFT

(11) **EP 2 096 006 B1**
(45) Veröffentlichungstag und Bekanntmachung des Hinweises auf die Patenterteilung: **27.04.2011**
(21) Anmeldenummer: 08075162.1
(22) Anmeldetag: 29.02.2008
(51) Int. Cl.: B60R 21/215

(54) **Haltemittel für eine Airbaganordnung und Airbaganordnung**
Container for an airbag assembly and airbag assembly
Moyen de fixation pour un agencement d'airbag et agencement d'airbag

(43) Veröffentlichungstag der Anmeldung: 02.09.2009
(73) Patentinhaber: Faurecia Innenraum Systeme GmbH, 76767 Hagenbach (DE); Bayerische Motoren Werke AG, 80809 München (DE)
(72) Erfinder: Dr. Jarosch, Oliver, 80331 München (DE); Stankovic, Lale, 31234 Edemissen (DE); Pütz, Tobias, 38527 Meine (DE); Kreppold, Michael, 85301 Schweitenkirchen (DE)
(74) Vertreter: Pfenning, Meinig & Partner GbR

(56) Entgegenhaltungen:
- WO-A-00/03899
- DE-U1- 20 004 076
- FR-A- 2 809 361
- FR-A- 2 902 727
- US-A- 5 544 912
- US-A- 5 651 562
- US-A1- 2003 184 058
- US-B1- 6 431 583

## Beschreibung

Gegenstand der Erfindung ist ein Haltemittel für eine Airbaganordnung nach dem Oberbegriff des Anspruchs 1 sowie eine Airbaganordnung mit einem darin angeordneten Haltemittel.

Für gewöhnlich weisen Airbaganordnungen eine an einem Träger angeordnete Airbagklappe mit einem darunterliegenden Schusskanal auf, wobei sich im Schusskanal ein Airbag befindet. Beim Auslösen des Airbags entfaltet sich dieser zunächst in der ihm durch den Schusskanal vorgegebenen Richtung und drückt auf die Airbagklappe, wobei die Airbagklappe geöffnet wird und sich der Airbag in den Fahrzeuginnenraum entfalten kann.

Bei den Airbags der neuen Generation sind diese vom Fahrzeuginnenraum her nahezu nicht mehr sichtbar. Dies wird unter anderem dadurch erreicht, dass eine beispielsweise in einer Instrumententafel angeordneter Beifahrerairbagklappe zusammen mit der Instrumententafel durch eine einstückige oder Gieß- oder Slushhaut überzogen worden ist. Dies erhöht jedoch wiederum den vom Airbag aufzubringenden Druck auf die Airbagklappe, um diese zu öffnen.

Bei der Öffnung der Airbagklappe übernehmen häufig so genannte Haltemittel eine Scharnierfunktion der Airbagklappe. Diese Haltemittel sind an der dem Fahrzeuginnenraum abgewandten Seite der Airbagklappe und am Träger oder im Schusskanal befestigt. Zumeist verlaufen die Haltemittel so, dass sie ein parallel zur Aufreißkante der Airbagklappe verlaufendes Scharnier bilden. Die Aufreißkante ist hierbei diejenige Kante, bei welcher der Airbag zumindest rein theoretisch zuerst hindurchtreten könnte.

Die Haltemittel weisen oftmals eine Überlänge auf, das heißt, dass diese nicht nur eine Verbindung minimaler Länge zwischen der Airbagklappe und dem Träger oder Schusskanal bilden dürfen, sondern aufgrund der Dicke des Trägers bzw. der Airbagklappe einer Überlänge bedürfen, so dass die Airbagklappe zum Durchtritt des Airbags zumindest an drei Seiten vollständig geöffnet werden kann. Die vierte Seite ist hierbei diejenige Seite, entlang derer das Haltemittel verläuft.

Ein derartiges Haltemittel ist beispielsweise aus der DE 101 35 614 A1 bekannt, bei welcher die Haltemittel einen zwischen einem an der Airbagklappe befestigten ersten Endabschnitt des Haltemittels und einem am Träger befestigten zweiten Endabschnitt des Haltemittels vorhandenen Abschnitt aufweisen, wobei der Abschnitt zwei sich überlappende mäanderförmig angeordnete Teilabschnitte aufweist. Durch diese Anordnung wird verhindert, dass die Überlänge des Haltemittels beliebig in den Schusskanal hineinragt und es zu einer Fehlfunktion der Airbagklappe beispielsweise aufgrund einer Verklemmung des Haltemittels durch den Airbag kommt und der Airbag nicht ausgelöst wird.

Bei der DE 101 35 614 bestehen die Haltemittel aus einer Folie. In der DE 196 20 538 A1 ist eine ähnliche Variante eines Haltemittels ausgeführt, wobei das dort aufgeführte Haltemittel unter anderem auch aus einem Metallblech bestehen kann. Bei der DE 196 20 538 A1 wird unter anderem beschrieben, wie ein unterhalb der Airbagklappe befindlicher Airbag die gesamte Airbagklappe anhebt und anschließend das Haltemittel eine Rotation der Airbagklappe einleitet, d. h. als Scharnier dient. Nachteil einer derartigen Anordnung ist es, dass beim Anheben des gesamten Airbagdeckels bereits ein Großteil der Aufprallenergie des Airbags auf die nicht sichtseitige Airbagklappe verwendet wird, und erst nachdem die Airbagklappe komplett herausgedrückt wurde, die Drehung der Airbagklappe beginnt, wobei die Drehung aufgrund der fehlenden Verbindung zwischen der Airbagklappe und dem Träger gewissen Schwankungen unterliegen kann, welche die ordnungsgemäße Entfaltung des Airbags stören können.

Die gattungsbildende Druckschrift FR 2 902 727 A1 offenbart ein Haltemittel für eine Airbaganordnung mit einem ersten Halteelement, welches über einen ersten Endabschnitt mit mindestens einer Airbagklappe und über einen zweiten Endabschnitt mit einem Schusskanal verbindbar ist und mindestens einen zwischen dem ersten und dem zweiten Endabschnitt angeordneten Abschnitt aufweist, wobei der Abschnitt mindestens zwei sich überlappende Teilabschnitte aufweist.

Das Haltemittel weist zudem ein zweites Halteelement auf, welches eine Verbindung zwischen mindestens zwei Teilabschnitten darstellt.

Ähnliche Vorrichtungen sind auch in den Druckschriften US 6 431 583 B1 und FR 2 809 361 A1 offenbart.

Die Druckschriften setzen sich nicht mit einem verbesserten Rotationsverhalten der Airbagklappe auseinander.

Aufgabe der vorliegenden Erfindung ist es, ein Haltemittel für eine Airbaganordnung zu schaffen, welches die vorgenannten Nachteile nicht aufweist. Des Weiteren ist es Aufgabe der Erfindung, eine Airbaganordnung zu schaffen, welche ein derartiges Haltemittel aufweist.

Die Aufgabe wird gelöst durch ein Haltemittel für eine Airbaganordnung nach den Merkmalen des Anspruchs 1 sowie durch eine Airbaganordnung nach den nachgeordneten Ansprüchen. Weiterbildungen der Erfindung sind in den untergeordneten Ansprüchen erläutert.

Das erfindungsgemäße Haltemittel ist dadurch gekennzeichnet, dass mindestens ein zweites Halteelement vorhanden ist, welches eine Verbindung zwischen den mindestens zwei Teilabschnitten herstellt, wobei das zweite Halteelement eine geringere Zugfestigkeit als das erste Halteelement aufweist.

Durch den die zwei sich überlappenden Teilabschnitte aufweisenden Abschnitt des ersten Halteelements des Haltemittels wird die Überlänge zur ordnungsgemäßen Scharnierfunktion eines Airbags hergestellt. Dadurch, dass die mindestens zwei Teilabschnitte miteinander verbunden sind, wird die ursprünglich durch die gesamte Länge des Abschnitts definierte Überlänge jedoch verkürzt. Dabei wird die Verbindung zwischen den mindestens zwei Teilabschnitten vorteilhafterweise derart hergestellt, dass der sich zwischen dem ersten und zweiten Endabschnitt befindliche Abschnitt effektiv auf eine Länge reduziert wird, welche im Wesentlichen der direkten Verbindung zwischen dem an einem Träger oder dem Schusskanal befestigten zweiten Endabschnitt des Haltemittels und dem an einer Airbagklappe befestigten ersten Endabschnitt entspricht. Auch kann die effektive Anfangsüberlänge, welche die Länge des Abschnitts vom ersten Endabschnitt bis zur Verbindung und vom zweiten Endabschnitt bis zur Verbindung zusammen darstellt, unwesentlich länger als die direkte Verbindung sein. Die direkte Verbindung wird hierbei durch eine Gerade gebildet.

Das Haltemittel schränkt eine auf eine mit dem Haltemittel in Wirkverbindung stehende Achse der Airbagklappe wirkende Hubbelastung ein, wobei die Hubbelastung auf einer im Wesentlichen parallel zu dieser Achse gegenüberliegenden Achse der Airbagklappe unverändert bleibt, was zu einem direkten Einleiten der Drehbewegung der Airbagklappe führt. Nach dem Einleiten der Drehbewegung der Airbagklappe wird die durch den zwischen dem ersten und zweiten Endabschnitt angeordneten Abschnitt definierte Überlänge in ihrer gesamten Länge vonnöten, um eine vollständige Öffnung der Airbagklappe zu ermöglichen. Da das zweite Halteelement, mit welchem die Verbindung zwischen den mindestens zwei Teilabschnitten hergestellt wird, eine geringere Zugfestigkeit als das erste Halteelement aufweist, reißt die zwischen den mindestens zwei Teilabschnitten herrschende Verbindung aufgrund des Aufpressdrucks des Airbags auf, wodurch die gesamte durch den Abschnitt definierte Überlänge zur Verfügung steht. Die Überlänge steht jedoch erst dann zur Verfügung, nachdem die Drehbewegung der Airbagklappe bereits initiiert wurde.

Der Vorteil des erfindungsgemäßen Haltemittels ist es, dass zunächst die Rotation der Airbagklappe eingeleitet wird und erst anschließend die Überlänge, welche aufgrund der Dicke des Trägers bzw. der Instrumententafel oder der Airbagklappe vonnöten ist, aufgrund des Aufreißens der Verbindung zur Verfügung steht. So wird eine Hubbelastung nahezu vermieden. Der zweite Endabschnitt kann auch an einem anderen im Bereich des Schusskanals oder des Trägers angeordneten ortsfesten Gegenstand befestigbar sein. Diese Gegenstände sind ausdrücklich unter den Begriffen Träger und Schusskanal umfasst.

In einer Ausführungsform der Erfindung ist das erste Halteelement als ein Gewebe oder eine Folie aus Polyester, besonders vorzugsweise faserverstärkten Polyester und/oder Aramid ausgebildet. Hierbei ist insbesondere die Verwendung von Aramid hervorzuheben, welches eine besonders hohe Zugfestigkeit aufweist und somit besonders für die Verwendung in einem Haltemittel für eine Airbaganordnung geeignet ist.

In einer weiteren Ausführungsform der Erfindung wird die Verbindung zwischen den mindestens zwei Teilabschnitten durch Verkleben, Verschweißen oder Vernähen hergestellt. Bei den vorgenannten Verbindungsmöglichkeiten können die zwei Teilabschnitte derart miteinander verbunden werden, dass erst ab einem vordefinierten aufgebrachten Zug auf die Verbindung diese Verbindung aufgelöst wird und die gesamte Überlänge zur Verfügung steht. Der zum Aufreißen der Verbindung notwendige Zug beträgt vorzugsweise 800 bis 2000 N, besonders vorzugsweise 1000 bis 1500 N. Dabei ist die Zugfestigkeit der Verbindung immer geringer als die Zugfestigkeit des ersten Halteelements, welches vorzugsweise größer als 5000N ist. Je nach verwendeter Verbindung kommen als zweites Halteelement beispielsweise Kleber für eine Verklebungsverbindung, Kunststoffe für eine Verschweißungsverbindung oder Garn oder Fasern für eine Vernähung, welche in Form einer Naht aufgebracht werden, in Betracht. Hierbei ist insbesondere die Verwendung von Garn und Fasern in Form einer Naht hervorzuheben, da diese besonders einfach eingebracht werden können.

In einer weiteren Ausführungsform des Haltemittels weist der zwischen dem ersten und dem zweiten Endabschnitt angeordnete Abschnitt drei sich überlappende Teilabschnitte auf, wobei das mindestens eine zweite Halteelement eine Verbindung zwischen den mindestens drei Teilabschnitten herstellt. Diese "S"-förmige Anordnung des Abschnitts des ersten Halteelements stellt eine topologisch besonders einfache Lösung dar. Bei der Verwendung dieser Lösung können sowohl zwei als auch die drei Teilabschnitte miteinander verbunden werden. Selbstverständlich können auch mehr sich überlappende Teilabschnitte verwendet werden. Gleiches gilt für die Verbindung durch das zweite Halteelement.

In einer weiteren Ausführungsform ist am ersten Endabschnitt eine mit einer Airbagklappe verbindbare erste Platte und/oder am zweiten Endabschnitt eine mit einem Träger oder einem Schusskanal verbindbare zweite Platte am ersten Halteelement befestigt. Mit der ersten bzw. zweiten Platte ist es auf besonders einfache Art und Weise möglich, das Haltemittel an der Airbagklappe bzw. am Träger oder im Schusskanal zu befestigen. Insbesondere ist hier die Nachrüstbarkeit des Haltemittels hervorzuheben, da es später an bereits fertig konzipierte Airbaganordnungen angepasst und an diesen angeordnet werden kann. Die erste und/oder zweite Platte bestehen dabei vorzugsweise aus Polypropylen und besonders vorzugsweise ein faserverstärktes Polypropylen wie etwa PPLGF 20. Vorzugsweise werden der erste Endabschnitt mit der ersten Platte und/oder der zweite Endabschnitt mit der zweiten Platte verklebt oder verschweißt oder verschraubt bzw. das erste Halteelement in die erste Platte und/oder die zweite Platte eingespritzt. Die Vorteile der unterschiedlichen Befestigungen zwischen der ersten bzw. zweiten Platte und dem ersten bzw. zweiten Endabschnitt sind im Stand der Technik hinreichend bekannt.

Die erste Platte ist dabei vorzugsweise mit einer Airbagklappe und/oder die zweite Platte mit einem Träger oder einem Schusskanal verklebbar, verschweißtbar oder verschraubbar ausgeführt. Dies bedeutet beispielsweise, dass beim Vorhandensein von Schraublöchern im Schusskanal oder im Träger die zweite Platte ebenfalls Bohrungen aufweist, welche mit den Bohrungen am Träger bzw. am Schusskanal fluchtend angeordnet sein können.

Um eine besonders gute und zugfeste Verbindung zwischen dem ersten bzw. zweiten Endabschnitt des ersten Halteelements und der ersten bzw. zweiten Platte herzustellen, weist der erste bzw. zweite Endabschnitt mindestens je zwei Endteilabschnitte auf, wobei sich mindestens zwei Endteilabschnitte überlappen und in zwei sich gegenüberliegenden voneinander beabstandeten Abschnitten der ersten bzw. zweiten Platte befestigt sind. Durch diese "U"- oder "J"-förmige Anordnung des ersten bzw. zweiten Endes an der ersten bzw. zweiten Platte wird verhindert, dass der erste oder zweite Endabschnitt sich von der ersten oder zweiten Platte lösen können.

Die verschiedenen Ausführungsformen des Haltemittels sind im Rahmen der Ansprüche miteinander kombinierbar.

Besonders bevorzugt wird das Haltemittel in einer Airbaganordnung mit mindestens einer einen Schusskanal überdeckenden Airbagklappe mit einer einem Fahrzeuginnenraum zugewandten Sichtseite eingesetzt. Dabei ist der erste Endabschnitt mit der mindestens einen Airbagklappe und der zweite Endabschnitt mit dem Schusskanal oder einem die eine Airbagklappe umgebenden Träger entlang einer Seite der mindestens einen Airbagklappe scharnierartig verbunden. Dies bedeutet weiterhin, dass die dieser Seite gegenüberliegende Seite der Airbagklappe eine erste Aufreißkante der Airbaganordnung bildet.

In einer spezielleren Ausführungsform der Airbaganordnung wird ein Haltemittel mit einer ersten und einer zweiten Platte verwendet, wobei die erste Platte an der Unterseite der Airbagklappe und die zweite Platte am Träger bzw. am Schusskanal angeordnet wird.

Eine weitere Alternative ist es, die Teilabschnitte des Abschnitts zwischen dem ersten und dem zweiten Endabschnitt nicht nur oder nicht miteinander zu verbinden, sondern mindestens einen Teilabschnitt mit dem Träger, der Airbagklappe oder dem Schusskanal zu verbinden und so eine Kürzung der effektiven Anfangslänge herbeizuführen. Im Rahmen des Aufreißens der Airbagklappe würde sich diese Verbindung aufgrund der geringeren Zugfestigkeit gegenüber dem ersten Halteelement lösen, und der gesamte Abschnitt zwischen dem ersten und zweiten Endabschnitt stünde als Scharnier zur Verfügung.

Nachfolgend soll die Erfindung anhand einiger Ausführungsbeispiele genauer erläutert werden. Es zeigen:
- Fig. 1a,b: eine Ausführungsform eines Haltemittels;
- Fig. 2a,b: eine Ausführungsform eines Gewebes;
- Fig. 3a-d: Wirkungsweise einer Ausführungsform des Haltemittels in einer Airbaganordnung.

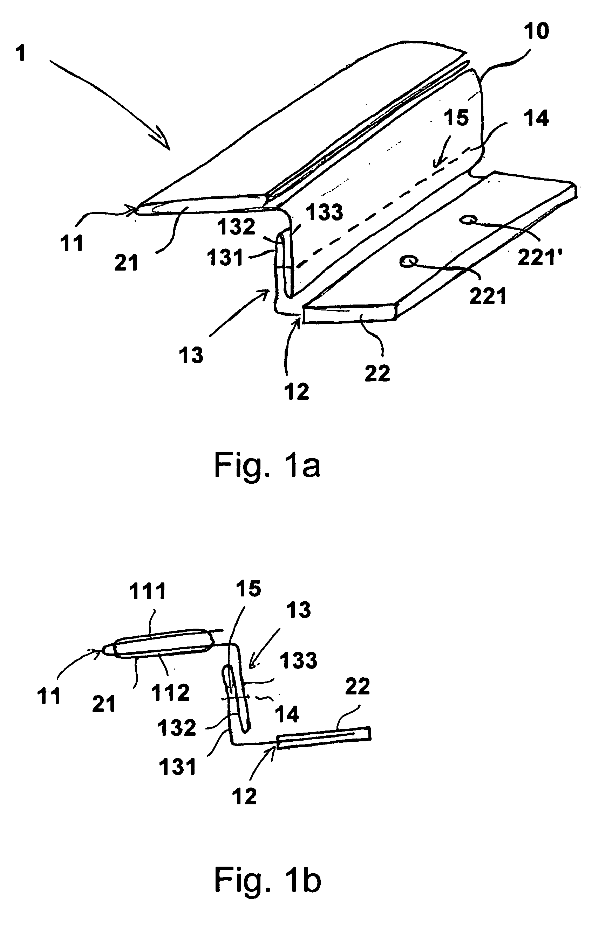

In der Fig. 1a wird eine Ausführungsform eines Haltemittels genauer beschrieben. Das Haltemittel 1 weist ein erstes Halteelement in Form des Gewebes 10 auf, welches einen ersten Endabschnitt 11 und einen zweiten Endabschnitt 12 besitzt. Zudem besitzt es einen zwischen dem ersten und dem zweiten Endabschnitt angeordneten Abschnitt 13, wobei der Abschnitt 13 drei sich überlappende Teilabschnitte 131, 132, 133 aufweist. Die drei sich überlappenden Teilabschnitte sind mit einem zweiten Halteelement 14 miteinander verbunden. Die Verbindung 15 ist angedeutet.

Der erste Endabschnitt 11 ist "U"- oder "J"-förmig um eine erste Platte 21 angeordnet, wobei die erste Platte 21 und damit der mit ihr verbundene erste Endabschnitt 11 des Haltemittels 1 mit einer Airbagklappe verbunden werden können. Der zweite Endabschnitt 12 befindet sich in einer zweiten Platte 22, wobei die zweite Platte 22 zwei Bohrungen 221, 221' aufweist, über welche es im Schusskanal oder am Träger einer Airbaganordnung befestigbar ist.

Das dargestellte Gewebe besteht aus einer Mischung aus Polyester- und Aramidfasern. Die erste Platte 21 und die zweite Platte 22 bestehen aus einem faserverstärkten Polypropylen, wobei die Verstärkungsfasern des Polypropylens Glasfasern sind. Alternativ zum Polyester können auch Polyamid oder Polyprophylen eingesetzt werden.

Das zweite Halteelement 14 ist in der Fig. 1a ein Faden, welcher jeweils durch die drei Teilabschnitte 131, 132, 133 hindurchgezogen wird und so diese miteinander vernäht, wobei die Naht die Verbindung 15 bildet. Das hier verwendete zweite Halteelement weist eine Zugfestigkeit auf, die sehr viel geringer ist als die Zugfestigkeit des Gewebes 10. Dies führt dazu, dass im initialen Moment, in welchem ein Airbag gegen eine Airbagklappe drückt, die Zugfestigkeit des zweiten Halteelements 14 zwar groß genug ist, um nicht zu reißen, jedoch nachdem die Rotation der Airbagklappe eingeleitet ist, der Zug zu groß wird und das zweite Halteelement reißt, wodurch die Verbindung 15 gelöst wird und der Abschnitt 13 mit seiner gesamten Länge zur Verfügung steht.

In Fig. 1b ist das Haltemittel 1 der Fig. 1a nochmals in einer anderen Perspektive dargestellt. Der hier gezeigte Schnitt I durch die Fig. 1a offenbart, dass der erste Endabschnitt 11 des Haltemittels 1 zwei Endteilabschnitte 111, 112 aufweist, welche jeweils die Schenkel des "J" bzw. "U" bilden. Die beiden Schenkel sind dabei zu Teilen in die erste Platte 21 eingespritzt, jedoch voneinander beabstandet. Lediglich in x-Richtung außerhalb der ersten Platte 21 befinden sich Enden, welche nicht in die Platte eingespritzt sind. Diese Enden dienen dazu, dass bei der Produktion des Haltemittels auf einfache Weise überprüft werden kann, ob der erste Endabschnitt 11 auch tatsächlich die gesamte in x-Richtung gesehene Länge der ersten Platte 21 durchläuft. Alternativ dazu kann die links der Platte 21 liegende Schlaufe sich in der Platte 21 befinden.

Weiterhin ist zu sehen, dass der zweite Endabschnitt 12 sich zu Teilen innerhalb der zweiten Platte 22 befindet. Es ist ebenfalls in diese eingespritzt. Über die später in die Bohrungen 221, 221' einzubringenden Schrauben wird ebenfalls der in der zweiten Platte 22 befindliche zweite Endabschnitt 12 durchdrungen, so dass auch dieses stabil in der zweiten Platte 22 gehalten wird.

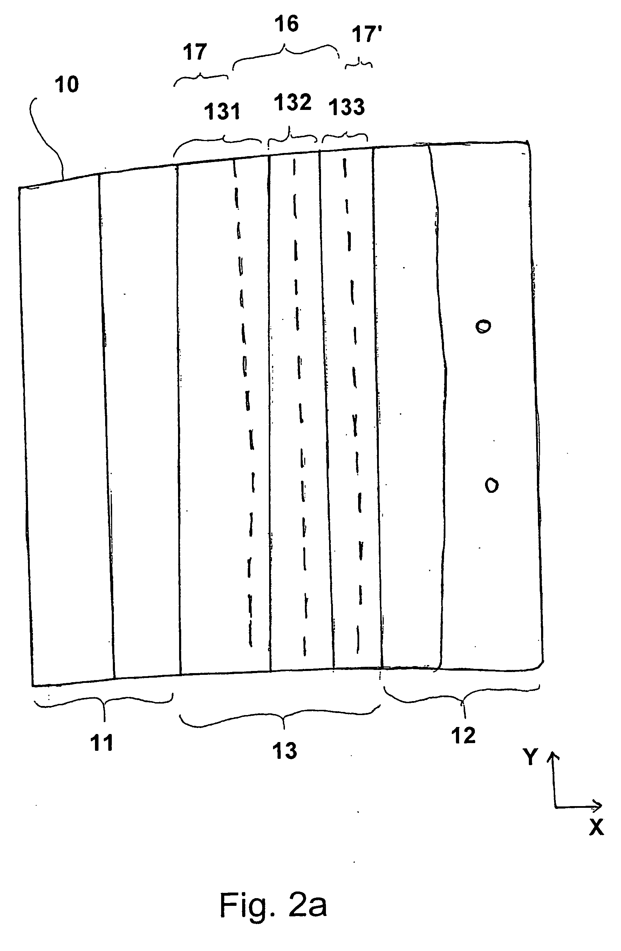

In der Fig. 2a ist das erste Halteelements in Form des Gewebes 10 des Haltemittels 1 genauer dargestellt. An dieser Stelle sei erwähnt, dass das erste Halteelement für sich genommen bereits ein Haltemittel bildet. Dabei wird der erste Endabschnitt 11 direkt an einer Airbagklappe befestigt, der zweite Endabschnitt 12 direkt am Träger oder im Schusskanal befestigt und das zweite Halteelement 14 im Abschnitt 13 derart aufgebracht, dass die Verbindung 15 hergestellt ist.

Das Gewebe 10 weist in der y-Richtung eine Länge auf, welche im Wesentlichen der Breite einer Airbagklappe entspricht. Es ist jedoch auch denkbar, über die Breite der Airbagklappe verteilt mehrere, jedoch schmalere Gewebe 10 bzw. Haltemittel 1 anzubringen. Die Länge in x-Richtung ist dabei so gewählt, dass der Abschnitt 13 im Bereich zwischen 5 und 20 cm, besonders vorzugsweise zwischen 6 und 14 cm liegt. Die Breite in y-Richtung ist vorzugsweise zwischen 20 und 80 cm, besonders vorzugsweise zwischen 25 und 40 cm. Das Gewebe 10 ist im entfalteten Zustand dargestellt, d. h. der Ort der Verbindung 15 ist lediglich angedeutet, jedoch aufgetrennt. Die mittels der Verbindung 15 erreichte Kürzung der Überlänge des Abschnitts 13 wird durch den gekürzten Bereich 16 angedeutet. Dies bedeutet, dass die effektive Anfangsüberlänge, d. h. beim Auslösen des Airbags, bevor dieser auf die Airbagklappe trifft, im Wesentlichen die Summe der Abschnitte 17 und 17' ist. Diese wird nach der Lösung der Verbindung 15 zur Überlänge des gesamten Abschnitts 13 verlängert.

Anhand der Fign. 1a, 1b und 2a soll noch erläutert werden, warum drei sich überlappende Teilabschnitte 131, 132, 133 vorteilhaft sind. Eine derartige Überlappung hat zur Folge, dass die Verbindung 15 im Wesentlichen an jeder Stelle der Teilabschnitte aufgebracht werden kann und in jedem Falle, vorausgesetzt, dass die Verbindung 15 alle drei Teilabschnitte miteinander verbindet, eine erfolgreiche effektive Kürzung des Abschnitts 13 zur Summe der Abschnitte 17 und 17' vorgenommen werden kann. Ein leichtes Verschieben der Verbindung 15 in x-Richtung verändert den verkürzten Bereich nicht. Von daher ist dieser gleich bleibend und lediglich von der Art der Anordnung der überlappenden Teilbereiche abhängig.

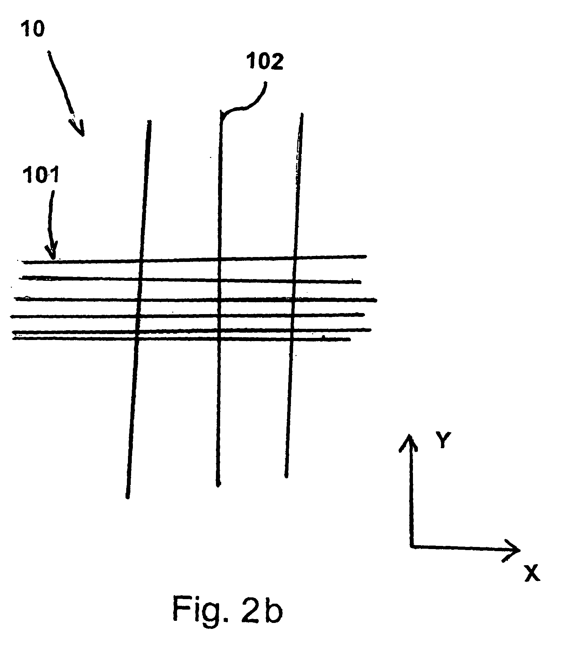

In der Fig. 2b ist das Innenleben des Gewebes 10 dargestellt, wobei in x-Richtung Aramidfasern 101 verlaufen, welche eine höhere Dichte aufweisen als die Fasern 102, welche in y-Richtung verlaufen. Dies erhöht insbesondere die Zugfestigkeit in x-Richtung, welche beim Einbau des Haltemittels 1 bzw. des Gewebes 10 in eine Airbaganordnung für das erste Halteelement die entscheidende Zugrichtung ist.

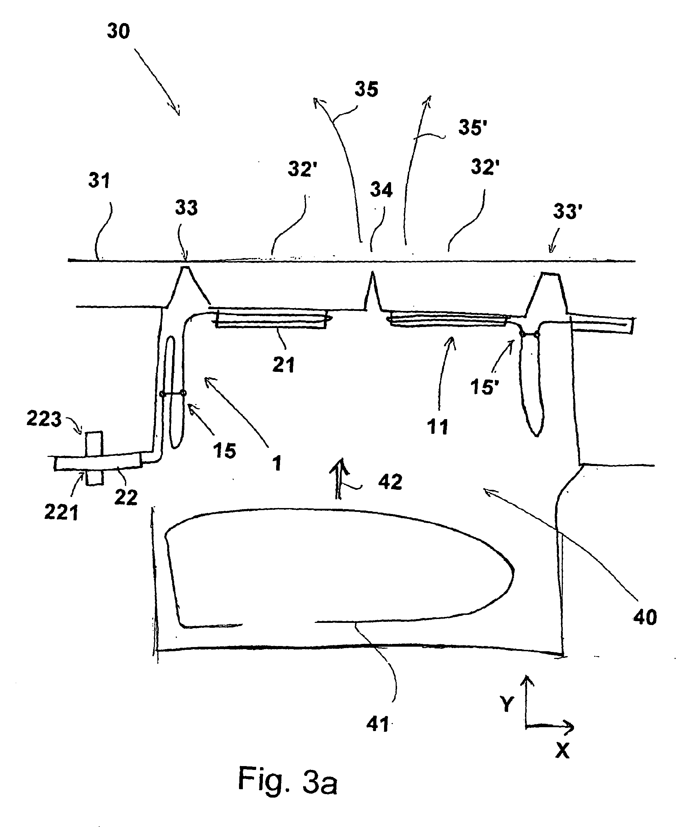

Anhand der Fign. 3a-d soll die Wirkungsweise und Anordnung des Haltemittels in einer Airbaganordnung erläutert werden. Die Airbaganordnung 30 weist einen Träger 31 und zwei Airbagklappen 32, 32' auf, wobei die Airbagklappen 32, 32' mit dem Träger 31 über geschwächte Verbindungsstellen 33 bzw. 33' verbunden sind. Dabei können die geschwächten Verbindungsstellen 33, 33' eine Scharnierwirkung haben, sie können jedoch auch beim Auslösen eines Airbags aufplatzen, so dass keine Verbindung - außer den Haltemitteln 1, 1' zwischen dem Träger 31 und den Airbagklappen 32, 32' mehr existiert. Zwischen den Airbagklappen 32, 32' ist eine Schwäche erkennbar, durch welche die Aufreißkante 34 gebildet wird. In y-Richtung unterhalb der Airbagklappen 32, 32' liegt der Schusskanal 40 mit dem darin befindlichen Airbag 41. Beim Auslösen des Airbags 41 wird dieser in Richtung 42 gepresst, was dazu führt, dass dieser auf die Airbagklappen 32, 32' drückt und eine Rotation derselbigen in den Richtungen 35, 35' bewirkt.

Sowohl die Airbagklappe 32 als auch die Airbagklappe 32' sind mit einem Haltemittel 1 bzw. 1' verbunden. Dabei ist die erste Platte 21 mit der Airbagklappe 32 verschweißt. Das Haltemittel 1 ist im Schusskanal 40 angeordnet, wobei es über eine durch die Bohrung 221 gesteckte Schraube 223 mit diesem fest verbunden ist. Das Haltemittel 1' ist in den Träger 31 gespritzt.

Das Haltemittel 1 weist eine Verbindung 15 auf, welche drei überlappende Teilabschnitte miteinander verbindet. Aus dieser Ansicht wird klar, dass die Verbindung 15 in der y-Richtung verschiebbar ist, ohne die effektive Anfangsüberlänge des ersten Halteelements des Haltemittels 1 zu verändern. Das Haltemittel 1' weist lediglich zwei sich überlappende Teilabschnitte 131', 132' auf, wobei die Verbindung 15' derart angeordnet ist, dass sie eine maximale Verkürzung bewirkt. Bei einer Verschiebung der Verbindung 15' in y-Richtung nach unten wird der Grad der Verkürzung geringer, so dass es bei lediglich zwei sich gegenüberliegenden Teilabschnitten auch auf die Position der Verbindung 15' ankommt. Die Verbindung 15 wird wie in den Fign. 1a, 1b gezeigt mittels eines Garns bzw. einer Faser hergestellt und bildet eine Naht. Die Verbindung 15' wird durch ein zweites Halteelement 14' gebildet, wobei das zweite Halteelement 14' ein Klebstoff ist.

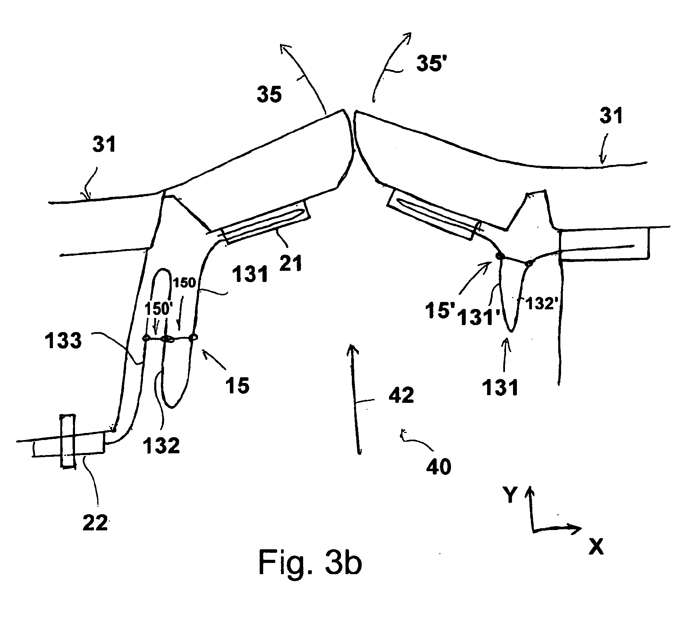

In der Fig. 3a ist die Airbaganordnung 30 geschlossen. Bei der Auslösung des Airbags 41 drückt dieser in der Richtung 42 nach oben. Beim Auftreffen auf die der Sichtseite abgewandte Seite der Airbagklappen 32 bzw. 32' drückt dieser zunächst gleichmäßig auf die Airbagklappen. Da sich jedoch in den Verbindungsbereichen 33 bzw. 33' die Haltemittel 1 bzw. 1' befinden und diese gegen einen Hub der Airbagklappen 32 bzw. 32' Widerstand leisten, kommt es zu einer initialen Rotation der Airbagklappen 32 bzw. 32' in den Richtungen 35 bzw. 35'. Dies führt dazu, wie in Fig. 3b gezeigt, dass die Aufreißkante 34 aufreißt. Die Aufreißkante 34 erstreckt sich hierbei in z-Richtung. Zum Zeitpunkt des Aufreißens der Aufreißkante 34 sind die eingezeichneten Verbindungen 15 bzw. 15' noch intakt.

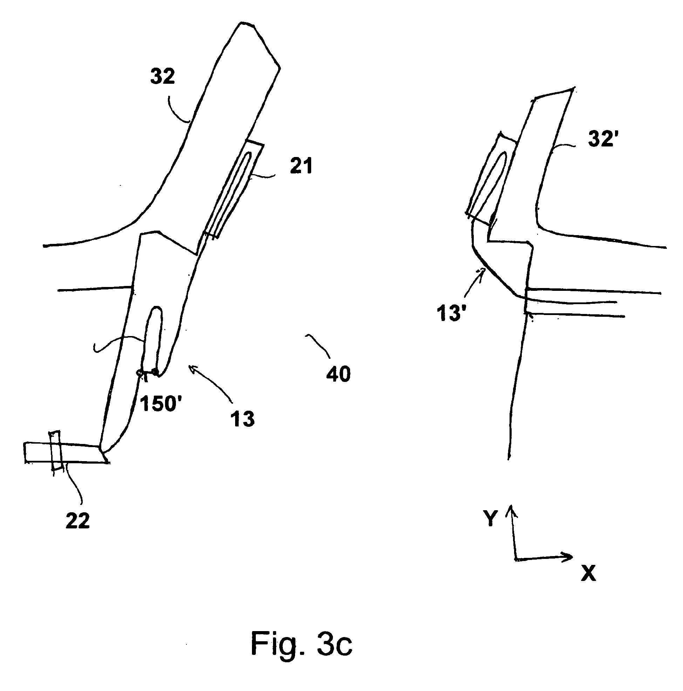

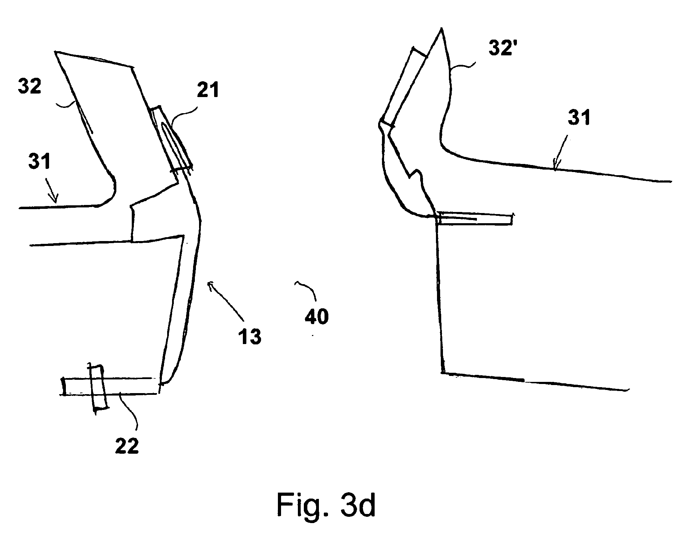

Bei einem weiteren Nachdrücken des Airbags lösen sich die Verbindungen 15 bzw. 15' und ermöglichen nun das weitere Aufschwingen der Airbagklappen 32 bzw. 32'. Dabei kann, wie dargestellt, die Verbindung 15 aus zwei Unterverbindungen 150, 150' aufgebaut sein, so dass zunächst die Verbindung 150 zwischen zwei sich überlappenden Teilbereichen reißt. Dies ist in Fig. 3c dargestellt. Zu einem späteren Zeitpunkt reißt dann die zweite Teilverbindung 150', wie in Fig. 3d dargestellt. Jedoch ist es selbstverständlich auch möglich, dass die Verbindung 15 als eine durchgehende, alle drei Teilbereiche verbindende Verbindung 15 ausgebildet ist, wobei diese Verbindung reißt und alle drei Teilbereiche freigibt.

Die hier gezeigten Haltemittel erfüllen alle gleichzeitig eine Scharnierfunktion. Es ist jedoch auch denkbar, die Haltemittel mit v-förmigen ersten Halteelementen auszubilden, wobei diese entlang der Seitenkanten, d. h. in den Fign. 3a bis 3d in x-Richtung verlaufenden Kanten der Airbagklappen angeordnet sind, wobei die Verbindung 15 dann von zunehmender zu abnehmender x-Richtung einen graduellen Anstieg der Zugfestigkeit aufweist, so dass zunächst der linke Bereich der Airbagklappe 32 aufreißen würde, da hier der Widerstand am geringsten ist.

## Patentansprüche

1. Haltemittel (1, 1') für eine Airbaganordnung mit einem ersten Halteelement, welches über einen ersten Endabschnitt (11) mit mindestens einer Airbagklappe (32; 32') und über einen zweiten Endabschnitt (12) mit einem Schusskanal (40) oder über den ersten Endabschnitt mit mindestens einer Airbagklappe (32; 32') und über den zweiten Endabschnitt mit einem die Airbagklappe umgebenden Träger (31) verbindbar ist und mindestens einen zwischen dem ersten und dem zweiten Endabschnitt (11,12) angeordneten Abschnitt (13) aufweist, wobei der Abschnitt mindestens zwei sich überlappenden Teilabschnitte (131, 132, 133; 131', 132') aufweist,
wobei mindestens ein zweites Halteelement (14) eine Verbindung (15) zwischen den mindestens zwei Teilabschnitten (131, 132, 133; 131', 132') herstellt, wobei das zweite Halteelement (14) eine geringere Zugfestigkeit als das erste Halteelement aufweist, wobei das erste Halteelement ein Gewebe (10) oder eine Folie aus Polyester und/oder faserverstärkten Polyester und/oder Aramid aufweist, **dadurch gekennzeichnet, dass** die Zugfestigkeit des zweiten Halteelements zwischen 800 N und 2000 N beträgt.

2. Haltemittel nach Anspruch 1, **dadurch gekennzeichnet, dass** die Verbindung (15) durch verkleben, verschweißen oder vernähen hergestellt ist.

3. Haltemittel nach einem der vorhergehenden Ansprüche, **dadurch gekennzeichnet, dass** am ersten Endabschnitt (11) eine mit einer Airbagklappe (32, 32') verbindbare erste Platte (21) und/oder am zweiten Endabschnitt (12) eine mit einem Träger (31) oder einem Schusskanal (40) verbindbare zweite Platte (22) befestigt ist.

4. Haltemittel nach Anspruch 3, **dadurch gekennzeichnet, dass** die erste und/oder zweite Platte (21, 22) Polypropylen, vorzugsweise aus einem faserverstärkten Polypropylen, aufweist.

5. Haltemittel nach einem der Ansprüche 3 oder 4, **dadurch gekennzeichnet, dass** der erste Endabschnitt (11) mit der ersten Platte (21) und/oder der zweite Endabschnitt (12) mit der zweiten Platte (22) verklebt oder verschweißt oder verschraubt oder eingespritzt ist.

6. Haltemittel nach einem der Ansprüche 3 bis 5, **dadurch gekennzeichnet, dass** die erste Platte (21) mit einer Airbagklappe (32; 32') und/oder die zweite Platte (22) mit einem Träger (31) oder einem Schusskanal (40) verklebbar oder verschweißbar oder verschraubbar ausgeführt ist.

7. Haltemittel nach einem der Ansprüche 3 bis 6, **dadurch gekennzeichnet, dass** der erste Endabschnitt (11) mindestens zwei Endteilabschnitte (111, 112) aufweist, wobei sich mindestens zwei Endteilabschnitte überlappen und an zwei sich gegenüberliegenden Seiten der ersten Platte (21) befestigt sind und/oder der zweite Endabschnitt (22) mindestens zwei Endteilabschnitte aufweist, wobei sich mindestens zwei Endteilabschnitte überlappen und durch an zwei sich gegenüberliegenden Seiten der zweiten Platte (22) befestigt sind.

8. Airbaganordnung (30) mit mindestens einer einen Schusskanal (40) überdeckenden Airbagklappe (32; 32') mit einer einem Fahrzeuginnenraum zugewandten Sichtseite und einem Haltemittel (14) nach einem der vorhergehenden Ansprüche, wobei der erste Endabschnitt (11) mit der mindestens einen Airbagklappe (32; 32') und der zweite Endabschnitt (12) mit dem Schusskanal (40) oder einem die Airbagklappe (32; 32') umgebenden Träger (31) entlang einer Seite der mindestens einen Airbagklappe (32; 32') scharnierartig verbunden ist.

9. Airbaganordnung (30) mit mindestens einer einen Schusskanal überdeckenden Airbagklappe mit einer einem Fahrzeuginnenraum zugewandten Sichtseite und einem Haltemittel nach einem der Ansprüche 4 bis 8, wobei die erste Platte (21) mit der Airbagklappe und/oder die zweite Platte (22) mit dem Träger oder dem Schusskanal verklebt oder verschweißt oder verschraubt oder eingespritzt ist und entlang einer Seite der mindestens einen Airbagklappe scharnierartig verbunden ist.

## Claims

1. A holding means (1, 1') for an airbag arrangement with a first holding element, which can be connected via a first end section (11) to at least one airbag flap (32; 32') and via a second end section (12) to a firing channel (40), or via the first end section to at least one airbag flap (32; 32') and via the second end section to a support (31) surrounding the airbag flap, and has at least one section (13) arranged between the first and the second end section (11, 12), the section having at least two overlapping partial sections (131, 132, 133; 131', 132'),
with at least one second holding element (14) producing a connection (15) between the at least two partial sections (131, 132, 133; 131', 132'), the second holding element (14) having a lesser tensile strength than the first holding element, the first holding element having a fabric (10) or a sheet of polyester and/or fibre-reinforced polyester and/or aramid, **characterised in that** the tensile strength of the second holding element is between 800 N and 2000 N.

2. A holding means according to Claim 1, **characterised in that** the connection (15) is brought about by gluing, fusing or stitching.

3. A holding means according to one of the preceding claims, **characterised in that** a first plate (21) which can be connected to an airbag flap (32, 32') is fastened to the first end section (11) and/or a second plate (22) which can be connected to a support (31) or a firing channel (40) is fastened to the second end section (12).

4. A holding means according to Claim 3, **characterised in that** the first and/or second plate (21, 22) has polypropylene, preferably of a fibre-reinforced polypropylene.

5. A holding means according to one of Claims 3 or 4, **characterised in that** the first end section (11) is glued or fused or screwed or injected in to the first plate (21), and/or the second end section (12) is glued or fused or screwed or injected in to the second plate (22).

6. A holding means according to one of Claims 3 to 5, **characterised in that** the first plate (21) is designed to be able to be glued or fused or screwed to an airbag flap (32; 32') and/or the second plate (22) is designed to be able to be glued or fused or screwed to a support (31) or a firing channel (40).

7. A holding means according to one of Claims 3 to 6, **characterised in that** the first end section (11) has at least two partial end sections (111, 112), with at least two partial end sections overlapping and being fastened to two opposing sides of the first plate (21), and/or the second end section (22) has at least two partial end sections, with at least two partial end sections overlapping and being fastened by on two opposing sides of the second plate (22).

8. An airbag arrangement (30) with at least one airbag flap (32; 32'), covering a firing channel (40), with a visible side facing an interior of the vehicle and a holding means (14) according to one of the preceding claims, the first end section (11) being connected in the manner of a hinge to the at least one airbag flap (32; 32') and the second end section (12) being connected to the firing channel (40) or a support (31) surrounding the airbag flap (32; 32') along one side of the at least one airbag flap (32; 32').

9. An airbag arrangement (30) with at least one airbag flap, covering a firing channel, with a visible side facing an interior of the vehicle and a holding means according to one of Claims 4 to 8, the first plate (21) being glued or fused or screwed or injected in to the airbag flap and/or the second plate (22) being glued or fused or screwed or injected in to the support or the firing channel, and being connected in the manner of a hinge along one side of the at least one airbag flap.

## Revendications

1. Moyen d'attache (1, 1') pour un dispositif d'airbag, comprenant un premier élément d'attache, qui peut être relié via une première section d'extrémité (11) à au moins une trappe d'airbag (32 ; 32') et via une seconde section d'extrémité (12) à au moins un canal de déploiement (40) ou via la première section d'extrémité à au moins une trappe d'airbag (32 ; 32') et via la seconde section d'extrémité à un support (31) entourant la trappe d'airbag et qui présente au moins une section (13) positionnée entre les première et seconde sections d'extrémité (11,12), ladite section présentant au moins deux sections partielles (131, 132, 133 ; 131', 132') qui se chevauchent,
comprenant au moins un second élément d'attache (14) qui établit une liaison (15) entre les au moins deux sections partielles (131, 132, 133 ; 131', 132'), ce second élément de fixation (14) présentant une plus faible résistance à la traction que le premier élément d'attache
le premier élément d'attache étant en tissu (10) ou en feuille de polyester et/ou en polyester renforcé par des fibres et/ou en fibres d'aramide et
le deuxième élément d'attache présentant une résistance à la traction comprise entre 800 N et 2000 N.

2. Moyen d'attache selon la revendication 1,
**caractérisé en ce que** la liaison (15) est établie par collage, soudage ou couture.

3. Moyen d'attache selon l'une quelconque des revendications précédentes,
**caractérisé en ce qu'**un premier panneau (21) pouvant être relié à une trappe d'airbag (32, 32') est fixé sur la première section d'extrémité (11) et/ou **en ce qu'**un second panneau (22) pouvant être reliée à un support (31) ou à un canal de déploiement (40) est fixé sur la seconde section d'extrémité (12).

4. Moyen d'attache selon la revendication 3,
**caractérisé en ce que** le premier et/ou le second panneau (21, 22) comporte du polypropylène, de préférence un polypropylène renforcé par des fibres.

5. Moyen d'attache selon l'une quelconque des revendications 3 ou 4,
**caractérisé en ce que** la première section d'extrémité (11) est collée, soudée, vissée ou surmoulée au premier panneau (21) et/ou **en ce que** la seconde section d'extrémité (12) est collée, soudée, vissée ou surmoulée au second panneau (22).

6. Moyen d'attache selon l'une quelconque des revendications 3 à 5,
**caractérisé en ce que** le premier panneau (21) peut être, en fonction de sa finition, collé, soudé ou vissée à un volet d'airbag (32 ; 32') et/ou **en ce que** le second panneau (22) peut être, en fonction de sa finition, collé, soudé ou vissé à un support (31) ou à un canal de déploiement (40).

7. Moyen d'attache selon l'une quelconque des revendications 3 à 6, **caractérisé en ce que** la première section d'extrémité (11) présente au moins deux sections partielles d'extrémité (111, 112), parmi lesquelles sections partielles d'extrémité au moins deux se chevauchent et sont fixées sur deux faces opposées du premier panneau (21) et/ou **en ce que** la seconde section d'extrémité (22) présente au moins deux sections partielles d'extrémité, parmi lesquelles sections partielles d'extrémité au moins deux se chevauchent et sont fixées sur deux faces opposées du second panneau (22).

8. Dispositif d'airbag (30) présentant au moins une trappe d'airbag (32; 32'), laquelle recouvre un canal de déploiement (40) et a un côté visible tourné vers un espace interne de véhicule et possède un moyen d'attache (14) selon l'une quelconque des revendications précédentes, et dans lequel la première section d'extrémité (11) est relié à au moins une des trappes d'airbag (32 ; 32') et la seconde section d'extrémité (12) au canal de déploiement ou à un support (31) entourant la trappe d'airbag (32 ; 32'), en formant respectivement une sorte de charnière le long d'un côté d'au moins une trappe d'airbag (32 ; 32').

9. Dispositif d'airbag (30) présentant au moins une trappe d'airbag, laquelle recouvre un canal de déploiement et a un côté visible tourné vers un espace interne de véhicule et possède un moyen d'attache selon l'une quelconque des revendications 4 à 8, et dans lequel le premier panneau (21) est collé, soudé, vissé ou surmoulé à la trappe d'airbag et/ou le second panneau (22) au support ou au canal de déploiement, en formant respectivement une sorte de charnière le long d'un côté d'au moins une trappe d'airbag.
